# FASCICULE DE BREVET EUROPEEN

(11) **EP 1 165 337 B1**
(45) Date de publication et mention de la délivrance du brevet: **14.06.2006**
(21) Numéro de dépôt: 00917158.8
(22) Date de dépôt: 07.04.2000
(51) Int. Cl.: B60J 5/06

(54) **CONTENEUR DE TRANSPORT A RIDEAUX COULISSANTS**
TRANSPORTBEHÄLTER MIT SCHIEBEVORHÄNGE
TRANSPORT CONTAINER WITH SLIDING CURTAINS

(30) Priorité: 09.04.1999 FR 9904474
(43) Date de publication de la demande: 02.01.2002
(73) Titulaire: S.A. Libner, 79400 Saint-Maixent l'Ecole (FR)
(72) Inventeur: LIBNER, Hervé, F-79400 Saint Maixent L'Ecole (FR)
(74) Mandataire: Fosse, Danièle
(86) Numéro de dépôt international: PCT/FR2000/000892
(87) Numéro de publication internationale: WO 2000/061398

(56) Documents cités:
- EP-A- 0 131 706
- DE-U- 29 608 103
- FR-A- 2 313 531
- GB-A- 2 174 136
- GB-A- 2 267 108
- US-A- 5 176 388

## Description

La présente invention concerne un conteneur de transport indépendant ou monté sur un véhicule tel qu'un camion, une remorque, un wagon, etc. dont au moins une paroi latérale est équipée de rideaux coulissants.

On connaît, par exemple pour des camions et des remorques de grande longueur, un système de parois latérales coulissantes, comprenant une pluralité de parois rideaux ou bâches montées sur des galets supérieurs, dont la tension horizontale est assurée par des cliquets sur la face avant ou arrière et la tension verticale par des sandows disposés à des distances de l'ordre de 600 ou 700 mm. Un tel système offre l'avantage d'une ouverture totale rapide, d'être léger et d'être économique. Il souffre cependant d'inconvénients importants.

En particulier, il nécessite trois ou quatre poteaux intermédiaires pour soutenir le rail supérieur qui permet d'assurer à la bâche une bonne tension verticale. De plus, le véhicule doit être muni de protections intérieures pour empêcher la marchandise de tomber sur les rideaux, ces protections étant réalisées par des ridelles en partie inférieure et/ou des lames de réhausse horizontales en aluminium ou en bois qui gênent l'accès à l'intérieur du véhicule et nécessitent d'être démontées.

La manipulation des parois latérales coulissantes est en outre longue et compliquée, nécessitant l'accrochage et le décrochage de très nombreuses sangles ainsi que le remontage et le démontage des protections intérieures.

Un inconvénient majeur des parois latérales en bâche est sa faible résistance à l'effraction qui peut se faire par une simple découpe du rideau au moyen d'un cutter. Le montage d'accessoires, par exemple des barres d'accrochage ou un capitonnage, est difficile.

Parmi d'autres inconvénients, on peut encore noter la saillie, en largeur du véhicule, des sangles de tension verticales, qui augmente la largeur hors tout du véhicule et entraîne de plus une grande difficulté de lavage dans les stations de lavage à rouleaux.

On connaît par ailleurs, par GB-A-2.267.108, un système de rideaux coulissants pour ouvertures latérales de véhicules dans lequel un rideau, est suspendu à des galets supérieurs portés par des plaques elles-mêmes solidaires de bandes métalliques verticales, comme dans l'état de la technique. Cependant, au lieu de fixer le rideau à la partie inférieure par des crochets, ce document prévoit de munir la partie inférieure du rideau de rouleaux coopérant avec un rail inférieur. Le système décrit dans ce document ne permet cependant pas de résoudre les problèmes exposés précédemment.- Une solution analogue est décrite dans EP-A-0.131.706.

GB-A-2.174.136 divulgue les caractéristiques du préambule de la revendication 1, mais dans ce système de rideaux la partie inférieure du rideau est munie d'une plaque de renforcement pliable fixée sur des poteaux coulissants portant eux-mêmes le rideau.

Si ce système apporte une solution partielle au problème de l'effraction, les autres problèmes posés ne sont pas résolus.

FR-A-2.313.531 décrit de son côté un système de bâchage constitué d'arceaux coulissant à leur partie inférieure dans des chemins de roulement, au moyen de moyens d'entraînement mécaniques, la bâche étant portée par lesdits arceaux. Ce système de bâchage n'apporte aucune solution satisfaisante à l'ensemble des problèmes exposés préalablement.

Il en est de même du document US-A-5.176.388 qui décrit une paroi souple montée sur un rideau métallique à croisillons, la paroi comportant des poches permettant d'absorber les déformations de pliage.

DE-U-29.608.103, qui décrit un système de rideau repliable classique muni de plaques de renforcement, ne permet que d'améliorer la résistance à l'effraction, sans résoudre les autres problèmes posés.

La présente invention vise en conséquence à fournir un nouveau système de fermeture à rideaux coulissants ne présentant pas les inconvénients des systèmes connus.

A cet effet, l'invention a pour objet un conteneur de transport, indépendant ou fixé sur un véhicule tel qu'un camion, une remorque ou un wagon, du type comprenant une surface de chargement horizontale de forme générale rectangulaire dont au moins une face latérale est équipée de parois latérales en bâche montées à coulissement longitudinal sur un rail supérieur, caractérisé en ce que lesdites parois en bâche sont accrochées sur un ensemble de persiennes rigides repliables en forme d'accordéon, l'extrémité supérieure desdites persiennes coulissant sur un rail supérieur par l'intermédiaire de chariots à roulettes tandis que l'extrémité inférieure coulisse sur un rail inférieur, portant le rail supérieur, au moyen de chariots inférieurs à galets.

L'idée inventive à la base de la présente invention consiste à fermer les ouvertures du conteneur par des ensembles de persiennes rigides repliables en forme d'accordéon sur lesquelles sont accrochées des parois en bâche.

Les persiennes rigides peuvent être métalliques, en bois, en matière synthétique, en composites, etc.

Selon une forme de réalisation préférée de l'invention, les persiennes sont assemblées par couples de deux persiennes pivotant respectivement sur une pièce d'articulation supérieure et une pièce d'articulation inférieure.

Avantageusement, dans chaque couple de persiennes, les bords supérieurs de chaque persienne sont inclinés en convergeant vers le bas, ce qui permet de recevoir les plis de la bâche. Pour faciliter ce repliage, l'invention prévoit encore que le bord supérieur de la bâche est muni d'une bavette d'étanchéité ou d'un bord replié, de sorte que le repliage est forcé vers le bas.

De préférence, certaines au moins des persiennes sont munies de perçages, avantageusement en forme de trous de serrure, qui allègent l'ensemble et permettent le-montage d'accessoires tels que des barres de suspension, des capitonnages, etc.

L'invention sera bien comprise à la lecture de la description suivante d'un exemple de réalisation, en référence au dessin annexé dans lequel :
la figure 1 est une vue en perspective latérale d'une portion d'une structure selon l'invention, en position de fermeture,

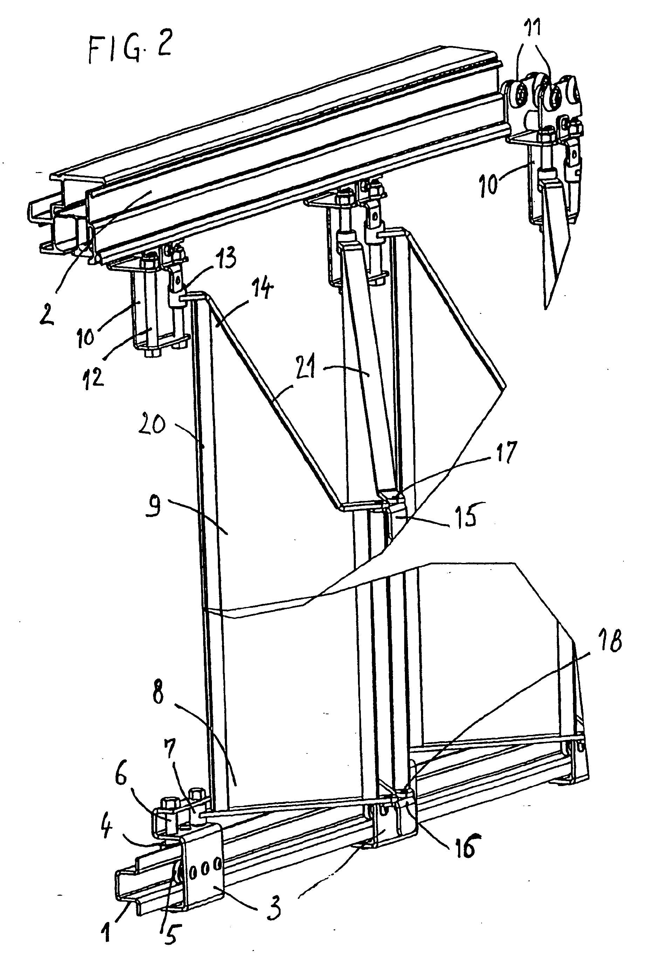

la figure 2 est analogue à la figure 1, pour une position intermédiaire d'ouverture,
la figure 3 est analogue aux figures 1 et 2, pour la position d'ouverture,
la figure 4 est une vue en élévation de bout de la structure des figures 1 à 3,
la figure 5 est une vue en élévation de face d'un chariot supérieur de la structure des figures 1 à 4,
la figure 6 est une vue en élévation de face d'un chariot inférieur de la structure des figures 1 à 4,
la figure 7 est une vue en plan de dessous de la structure des figures 1 à 4,
la figure 8 est une vue en élévation de face d'un élément de la structure selon les figures 1 à 4, pour une variante,
la figure 9 est une vue en perspective de l'ensemble de la figure 8, en position intermédiaire d'ouverture,
la figure 10 est une vue en perspective éclatée d'un couple de persiennes, pour une variante de réalisation, et
les figures 11, 12 et 13 sont des vues en élévation latérale d'une portion inférieure d'une persienne d'extrémité munie d'un verrou, pour trois positions du verrou respectivement.

Dans le dessin, on n'a représenté, pour des raisons de clarté, que la structure porteuse de la bâche.

La structure selon l'invention comprend un rail inférieur 1 profilé en acier ou en aluminium, qui peut être fixé à un plateau (non représenté) d'un véhicule, et un rail supérieur 2 également profilé, qui est habituellement porté par le rail inférieur 1 entre deux poteaux d'extrémité (non représentés) du véhicule.

Une pluralité de chariots inférieurs 3, munis de deux séries de galets horizontaux 4 et d'une série de galets verticaux 5, coulissent sur le rail inférieur 1 en étant parfaitement guidés, de préférence à guidage étroit, par la coopération des galets horizontaux 4 et verticaux 5 avec des surfaces correspondantes du rail profilé 1. Chaque chariot inférieur 3 porte en outre deux axes d'articulation verticaux 6 d'une fourrure 7 solidaire d'une extrémité inférieure latérale 8 d'une persienne 9, le pivotement de la fourrure 7 se faisant pratiquement sans jeu.

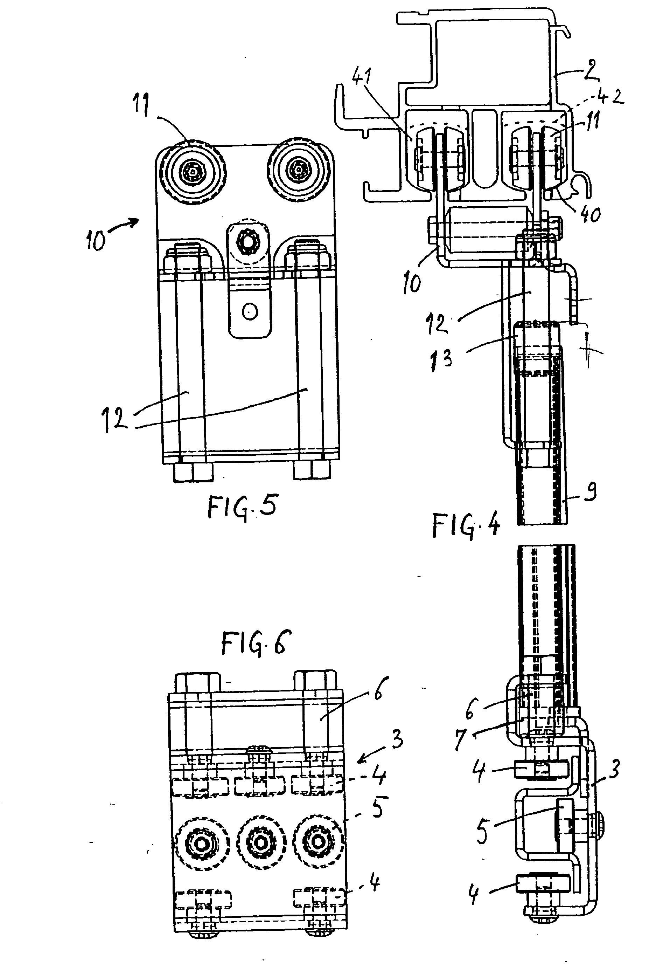

Sur le rail supérieur 2 sont suspendus des chariots supérieurs 10 munis de deux couples de roulettes verticales 11. Chaque chariot supérieur 10, disposé en regard d'un chariot inférieur 3, porte deux axes verticaux 12 sur chacun desquels peut coulisser verticalement une fourrure 13 solidaire de l'extrémité supérieure latérale 14 d'une persienne 9. Chaque roulette 11 roule sur le fond arrondi 40 d'un logement 41 longitudinal fermé du rail supérieur 2. Afin de limiter le déplacement de- la roulette 11 et améliorer le guidage, le sommet 42 du logement 41 est avantageusement arrondi, comme représenté en pointillé (figure 4).

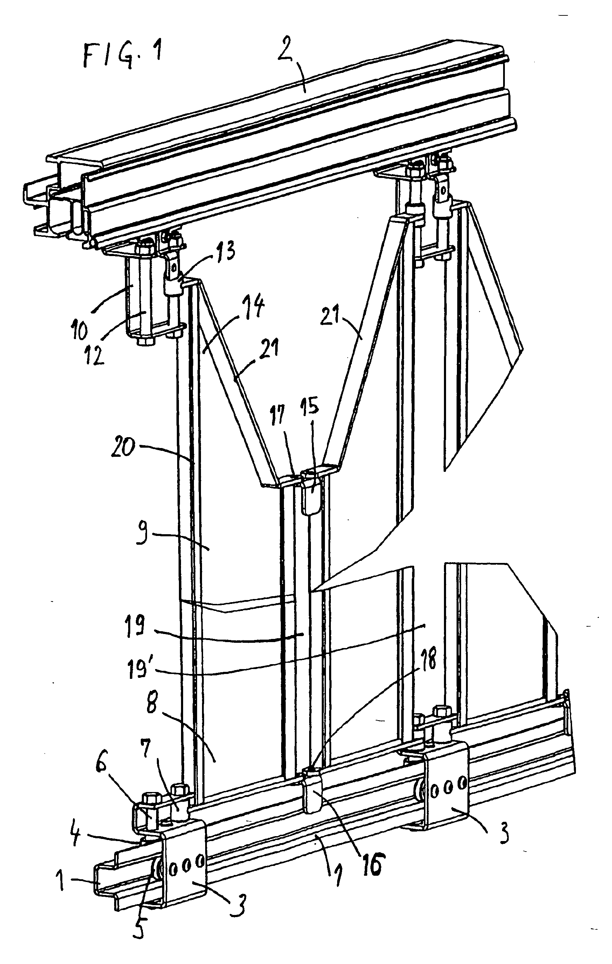

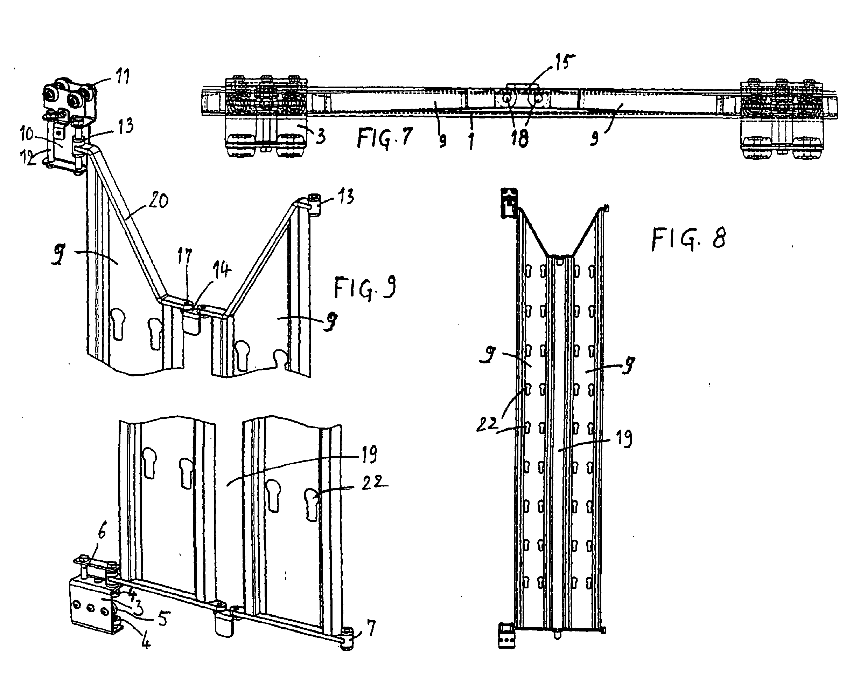

Entre deux ensembles de chariots inférieurs 3 et de chariots supérieurs 10 alignés respectivement verticalement, deux persiennes 9 sont assemblées en un couple, les deux persiennes d'un couple étant respectivement articulées, à leur bord opposé aux fourrures 7, 13 sur une pièce d'articulation ou de liaison supérieure 15 et une pièce d'articulation ou de liaison inférieure 16 portant respectivement deux axes d'articulation 17 et 18. Les pièces de liaison 15 et 16 sont conformées de telle sorte qu'elles forment, en position de fermeture (figures 1 et 7), des butées pour les persiennes 9 en maintenant le couple de persiennes selon un léger angle rentrant afin de faciliter l'ouverture et maintenir la bâche légèrement détendue, tout en ménageant entre les deux persiennes 9 du couple une fente étroite 19 nécessaire au pivotement. Une fente 19' de largeur comparable est ménagée entre les couples de persiennes.

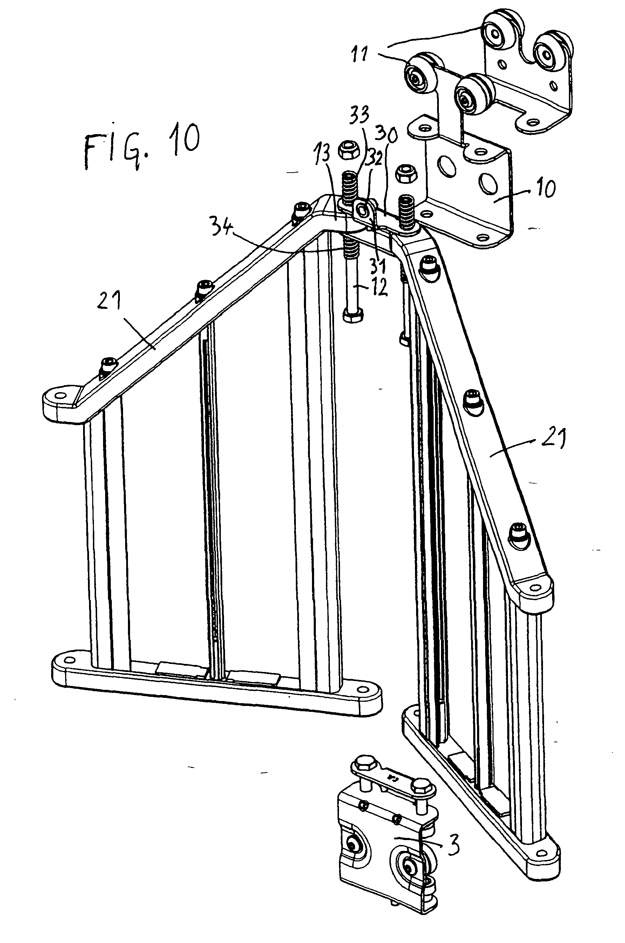

La bâche (non représentée) est fixée aux persiennes, par exemple à des cavaliers d'articulation 30 (figure 10) reliant les fourrures 13 et munis d'une saillie 31 comportant chacune un trou 32 pour la fixation de la bâche.

Avantageusement, les axes verticaux 12 sont montés dans le chariot 10 respectif avec interposition d'un ressort supérieur 33 et d'un ressort inférieur 34 (voir figure 10), de manière à limiter, les contraintes résultant en particulier des déformations du cadre- constitué par les rails inférieur 1 et supérieur 2.

Les persiennes 9 ont des bords 20 repliés pour des raisons de rigidification et le bord supérieur 21 est incliné de manière à former, en position fermée, un V dans chaque couple de persiennes 9, pour recevoir la partie supérieure de la bâche pendant et après la fermeture. Cette partie supérieure de la bâche peut être munie, de manière connue en soi, d'une bavette d'étanchéité ou d'un bord replié qui force le repliage de la bâche dans la découpe en V de chaque couple de persiennes.

De préférence, selon la forme de réalisation des figures 8 et 9, les persiennes 9 sont munies, pour au moins certaines d'entre elles, de perçages 22 en forme de trou de serrure qui permettent d'alléger l'ensemble et, surtout, de monter et démonter facilement des accessoires tels que des barres transversales de suspension, des câbles ou des sangles de maintien, des capitonnages, etc.

On peut également prévoir le montage de profilés (non représentés) servant de barres d'ancrage pour des traverses servant au montage d'un plancher intermédiaire.

On peut facilement disposer en partie basse un câble de plombage pour les transports de sécurité et/ou en transit douanier.

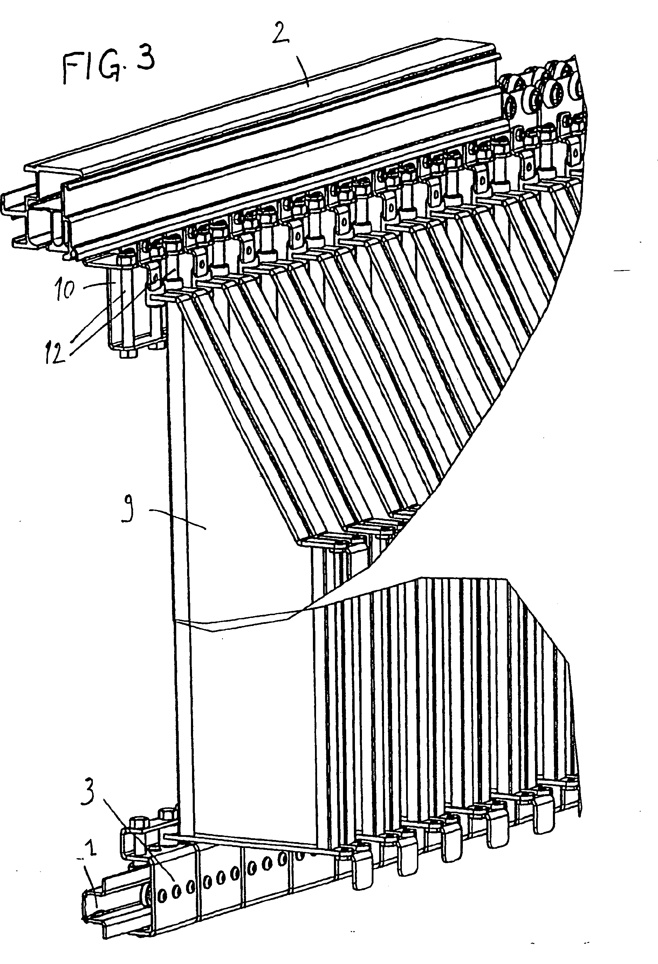

L'équipement selon l'invention peut avantageusement remplacer un fourgon à portes latérales ouvrantes du fait de son coût particulièrement compétitif. Il pallie en outre tous les inconvénients des systèmes à bâches coulissantes classiques, tout en assurant une largeur d'ouverture maximale de chargement, l'ensemble replié (figure 3) ne présentant qu'une longueur totale de l'ordre de deux mètres.

Un avantage particulier est la suppression des poteaux intermédiaires, des lames de réhausse et des ridelles. La suppression des très nombreuses sangles verticales accélère considérablement la vitesse et la facilité d'ouverture et de fermeture. L'absence de saillies extérieures et les surfaces parfaitement planes de bâche permettent un lavage efficace en machine à rouleaux et limitent la largeur hors-tout du véhicule.

L'utilisation de persiennes métalliques offre un progrès considérable contre le vol car, même après découpe de la bâche au cutter, les fentes entre les persiennes sont suffisamment faibles pour ne pas permettre l'extraction de colis ou d'objets. Les persiennes permettent en outre la pose d'accessoires, de la même manière qu'un fourgon beaucoup plus coûteux et lourd.

La structure selon l'invention permet en outre dé s'adapter aux déformations grâce à la possibilité de coulissement de la partie haute des persiennes 9, par l'intermédiaire des douilles 13 sur les axes 12 des chariots supérieurs 10, avec absorption des contraintes dans le cas de l'interposition des ressorts 33, 34.

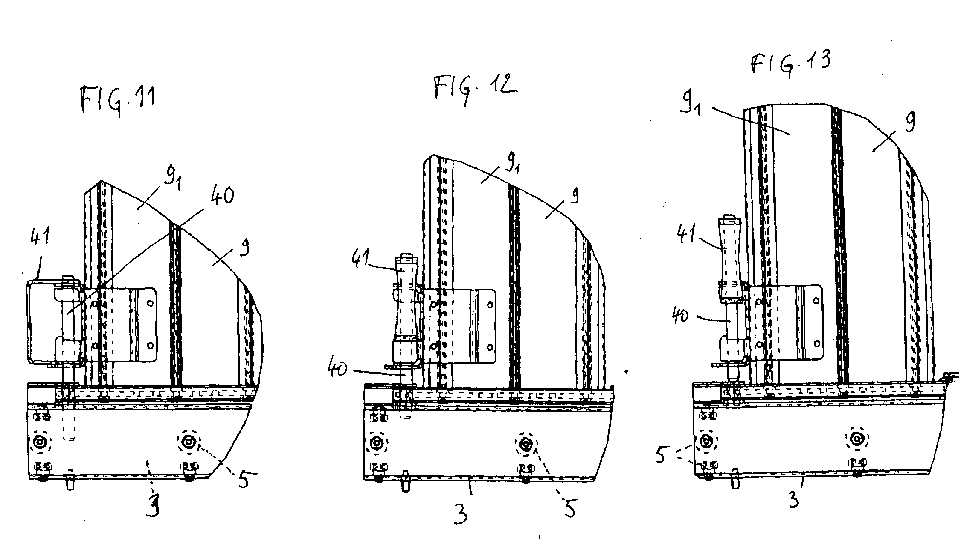

De préférence, les persiennes 9₁ d'extrémité sont munies d'un verrou coulissant 40 (figures 11, 12, 13) muni d'une poignée 41. Dans une position de verrouillage (figure 11), le verrou 40 verrouille la persienne d'extrémité 9₁ par rapport au rail inférieur 1 en traversant le chariot inférieur 3. Dans une position intermédiaire (figure 12), le verrou 40 a déverrouillé la persienne 9₁ par rapport au rail inférieur 1 mais solidarise encore la persienne et le chariot inférieur. Enfin, dans une position de déverrouillage complet (figure 13), le verrou 40 est complètement effacé de sorte que la persienne d'extrémité 9₁ peut pivoter par rapport à la persienne 9 adjacente.

## Revendications

1. Conteneur de transport, indépendant ou monté sur un véhicule tel qu'un camion, une remorque ou un wagon, du type comprenant une surface de chargement horizontale de forme générale rectangulaire dont au moins une face latérale est équipée de parois latérales en bâche montées à coulissement longitudinal sur un rail supérieur,
**caractérisé en ce que** lesdites parois en bâche sont accrochées sur un ensemble de persiennes (9) rigides repliables an forme d'accordéon, l'extrémité supérieure desdites persiennes (9) coulissant sur un rail supérieur (2) par l'intermédiaire de chariots (10) à roulettes (11) tandis que l'extrémité inférieure coulisse sur un rail inférieur (1), au moyen de chariots inférieurs (3) à galets (4, 5). ledit rail inférieur (1) portant le rail supérieur (2).

2. Conteneur de transport selon la revendication 1.
**caractérisé en ce que** les persiennes (9) sont métalliques, en bois, en matière synthétique ou en composites.

3. Conteneur de transport selon l'une des revendications 1 et 2.
**caractérisé en ce que** les persiennes (9) sont assemblées par couples de deux persiennes (9) pivotant respectivement sur une pièce d'articulation supérieure (15) et une pièce d'articulation inférieure (16).

4. Conteneur de transport selon la revendication 3.
**caractérisé en ce que** les chariots inférieurs (3) et les chariots supérieurs (10) sont agencés pour recevoir deux couples de persiennes (9) adjacents.

5. Conteneur de transport selon l'une des revendications 3 et 4.
**caractérisé en ce que**, dans chaque couple de persiennes (9), les bords supérieurs (21) de chaque persienne (9) sont inclinés en convergeant vers le bas.

6. Conteneur de transport selon la revendication 5.
**caractérisé en ce que** le bord supérieur de la bâche est muni d'une bavette d'étanchéité ou d'un bord replié.

7. Conteneur de transport selon l'une des revendications 1 à 6.
**caractérisé en ce que** les chariots inférieurs (3) sont montés à guidage étroit sur les rails inférieurs (1), les chariots supérieurs (10) étant montés suspendus sur les rails supérieurs (2).

8. Conteneur de transport selon la revendication 7,
**caractérisé en ce que** les roulettes (11) des chariots (10) supérieurs sont montés dans des logements (41) longitudinaux des rails supérieurs (2) dont le fond (40) et/ou le sommet (42) sont arrondis.

9. Conteneur de transport selon l'une des revendications 7 et 8.
**caractérisé en ce que** l'articulation (6. 7) des persiennes (9) sur les chariots inférieurs (3) est sans jeu tandis que les persiennes (9) sont montées à coulissement vertical sur les chariots supérieurs (10).

10. Conteneur de transport selon la revendication 9.
**caractérisé en ce que** des ressorts (33, 34) sont disposés de manière à amortir le coulissement vertical des persiennes (9) sur les chariots supérieurs (10).

11. Conteneur de transport selon l'une des revendications 2 à 10.
**caractérisé en ce que** les pièces d'articulation supérieures (15) et les pièces d'articulation inférieures (16) sont agencées pour que les persiennes (9) du couple forment, en position de fermeture, un léger angle rentrant.

12. Conteneur de transport selon l'une des revendications 1 à 10.
**caractérisé en ce que** les bords (20) des persiennes (9) sont repliés.

13. Conteneur de transport selon l'une des revendications 1 à 12.
**caractérisé en ce que** certaines au moins des persiennes (9) sont munies de perçages (22) avantageusement en forme de trous de serrure.

14. Conteneur de transport selon l'une des revendications 1 à 13.
**caractérisé en ce que** des fentes étroites (19; 19') sont ménagées entre les persiennes en position de fermeture.

15. Conteneur de transport selon l'une des revendications 1 à 14.
**caractérisé en ce qu'**une persienne d'extrémité (9₁) de l'ensemble de persiennes (9) est munie d'un verrou (40) coulissant pour coopérer avec le chariot inférieur (3) adjacent et le rail inférieur (1) et pour être dégagé du rail inférieur (1) et ensuite du chariot inférieur (3).

## Claims

1. Transport container, which is independent or fitted on a vehicle such as a lorry, a trailer or a truck, of the type comprising a horizontal loading surface with a generally rectangular shape, at least one lateral surface of which is equipped with lateral tarpaulin walls which are fitted such as to slide longitudinally on an upper rail,
**characterised in that** the said tarpaulin walls are hooked onto a set of rigid shutters (9) which can be folded back in the form of an accordion, the upper end of the said shutters (9) sliding on an upper rail (2) by means of carriages (10) with wheels (11), whereas the lower end slides on a lower rail (1) by means of lower carriages (3) with rollers (4,5), the said lower rail (1) supporting the upper rail (2).

2. Transport container according to claim 1,
**characterised in that** the shutters (9) are made of metal, wood, synthetic material or composite materials.

3. Transport container according to claim 1 or claim 2,
**characterised in that** the shutters (9) are assembled in pairs of two shutters (9) which pivot respectively on an upper articulation part (15) and a lower articulation part (16).

4. Transport container according to claim 3,
**characterised in that** the lower carriages (3) and upper carriages (10) are arranged to receive two pairs of adjacent shutters (9).

5. Transport container according to claim 3 or claim 4,
**characterised in that**, in each pair of shutters (9), the upper edges (21) of each shutter (9) are inclined such as to converge downwards.

6. Transport container according to claim 5,
**characterised in that** the upper edge of the tarpaulin is provided with a sealing flap or a folded-back edge.

7. Transport container according to any one of claims 1 to 6,
**characterised in that** the lower carriages (3) are fitted such as to be guided closely on the lower rails (1), the upper carriages (10) being fitted suspended on the upper rails (2).

8. Transport container according to claim 7,
**characterised in that** the wheels (11) of the upper carriages (10) are fitted in longitudinal receptacles (41) in the upper rails (2), the base (40) and/or top (42) of which are rounded.

9. Transport container according to claim 7 or claim 8,
**characterised in that** the articulation (6,7) of the shutters (9) on the lower carriages (3) is without play, whereas the shutters (9) are fitted such as to slide vertically on the upper carriages (10).

10. Transport container according to claim 9,
**characterised in that** springs (33, 34) are disposed such as to deaden the vertical sliding of the shutters (9) on the upper carriages (10).

11. Transport container according to any one of claims 2 to 10,
**characterised in that** the upper articulation parts (15) and the lower articulation parts (16) are arranged such that the shutters (9) of the pair form a slightly re-entering angle in the closure position.

12. Transport container according to any one of claims 1 to 10,
**characterised in that** the edges (20) of the shutters (9) are folded back.

13. Transport container according to any one of claims 1 to 12,
**characterised in that** at least some of the shutters
(9) are provided with apertures (22), which are advantageously in the form of lock holes.

14. Transport container according to any one of claims 1 to 13,
**characterised in that** narrow slots (19; 19') are provided between the shutters in the closure position.

15. Transport container according to any one of claims 1 to 14,
**characterised in that** an end shutter (9₁) of the set of shutters (9) is provided with a lock (40) which slides in order to co-operate with the adjacent lower carriage (3) and the lower rail (1), and to be released from the lower rail (1) and then from the lower carriage (3).

## Patentansprüche

1. Unabhängiger oder auf einem Fahrzeug wie einem Lastkraftwagen, einem Anhänger oder einem Waggon montierter Transportbehälter mit einer insgesamt rechteckig geformten waagerechten Ladefläche, bei der mindestens eine Seitenfläche mit eine Plane bildenden Seitenwänden ausgestattet ist, welche längsverschieblich an einer oberen Schiene montiert sind, **dadurch gekennzeichnet, dass** die genannten eine Plane bildenden Wände an einer Anordnung von starren, akkordeonförmig zusammenfaltbaren Klappläden (9) hängen, wobei das obere Ende der genannten Klappläden (9) auf einer oberen Schiene (2) vermittels Schlitten (10) mit Rollen (11) gleitet, während das untere Ende auf einer unteren Schiene (1) vermittels unterer Schlitten (3) mit Rollen (4, 5) gleitet, wobei die untere Schiene (1) die obere Schiene (2) trägt.

2. Transportbehälter nach Anspruch 1, **dadurch gekennzeichnet, dass** die Klappläden (9) metallisch, aus Holz, aus Kunststoff oder aus Verbundmaterialien sind.

3. Transportbehälter nach einem der Ansprüche 1 und 2, **dadurch gekennzeichnet, dass** die Klappläden (9) zu Paaren von zwei Klappläden (9) verbunden sind, welche an einem oberen Gelenkteil (15) beziehungsweise einem unteren Gelenkteil (16) schwenken.

4. Transportbehälter nach Anspruch 3, **dadurch gekennzeichnet**, die unteren Schlitten (3) und die oberen Schlitten (10) ausgestaltet sind, um zwei angrenzende Paare von Klappläden (9) aufzunehmen.

5. Transportbehälter nach einem der Ansprüche 3 und 4, **dadurch gekennzeichnet, dass** in jedem Paar von Klappläden (9) die oberen Ränder (21) jedes Klappladens (9) geneigt sind und dabei nach unten konvergieren.

6. Transportbehälter nach Anspruch 5, **dadurch gekennzeichnet, dass** der obere Rand der Plane mit einem Dichtungslappen oder einem umgefalzten Rand versehen ist.

7. Transportbehälter nach einem der Ansprüche 1 bis 6, **dadurch gekennzeichnet, dass** die unteren Schlitten (3) auf den unteren Schienen (1) eng geführt montiert sind, während die oberen Schlitten (10) auf den oberen Schienen (2) hängend montiert sind.

8. Transportbehälter nach Anspruch 7, **dadurch gekennzeichnet, dass** die Rollen (11) der oberen Schlitten (10) in Längsaufnahmen (41) der oberen Schienen (2) montiert sind, deren Grund (40) und/oder Gipfel (42) abgerundet sind.

9. Transportbehälter nach einem der Ansprüche 7 und 8, **dadurch gekennzeichnet, dass** die Anlenkung (6, 7) der Klappläden (9) auf den unteren Schlitten (3) ohne Spiel ist, während die Klappläden (9) auf den oberen Schlitten (10) vertikal verschieblich montiert sind.

10. Transportbehälter nach Anspruch 9, **dadurch gekennzeichnet, dass** Federn (33, 34) derart angeordnet sind, dass das vertikale Gleiten der Klappläden (9) auf den oberen Schlitten (10) abgefedert wird.

11. Transportbehälter nach einem der Ansprüche 2 bis 10, **dadurch gekennzeichnet, dass** die oberen Gelenkteile (15) und die unteren Gelenkteile (16) so ausgestaltet sind, dass die Klappläden (9) des Paares in der Schließstellung einen leichten einspringenden Winkel bilden.

12. Transportbehälter nach einem der Ansprüche 1 bis 10, **dadurch gekennzeichnet, dass** die Ränder (20) der Klappläden (9) umgefalzt sind.

13. Transportbehälter nach einem der Ansprüche 1 bis 12, **dadurch gekennzeichnet, dass** mindestens manche der Klappläden (9) mit Bohrungen (22) versehen sind, die in vorteilhafter Weise die Form von Schlüssellöchern aufweisen.

14. Transportbehälter nach einem der Ansprüche 1 bis 13, **dadurch gekennzeichnet, dass** schmale Schlitze (19; 19') zwischen den Klappläden in der Schließstellung gebildet sind.

15. Transportbehälter nach einem der Ansprüche 1 bis 14, **dadurch gekennzeichnet, dass** ein Endklappladen (9₁) der Anordnung von Klappläden (9) mit einem Gleitriegel (40) versehen ist, um mit dem angrenzenden unteren Schlitten (3) und der unteren Schiene (1) zusammenzuwirken und um von der unteren Schiene (1) und anschließend von dem unteren Schlitten (3) gelöst zu werden.
